(19) **Europäisches Patentamt**

**European Patent Office**

**Office européen des brevets**

(11) **EP 1 187 503 A1**

(12) **EUROPEAN PATENT APPLICATION**

(43) Date of publication:
**13.03.2002 Bulletin 2002/11**

(51) Int Cl.⁷: **H04Q 7/36**

(21) Application number: **00307844.1**

(22) Date of filing: **11.09.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **Alexiou, Angeliki**<br>**Swindon, Wiltshire SN5 5GH (GB)**<br><br>(74) Representative:<br>**Buckley, Christopher Simon Thirsk et al**<br>**Lucent Technologies (UK) Ltd,**<br>**5 Mornington Road**<br>**Woodford Green, Essex IG8 0TU (GB)** |
| (71) Applicant: **LUCENT TECHNOLOGIES INC.**<br>**Murray Hill, New Jersey 07974-0636 (US)** | |

(54) **Mobile telecommunications network with improved downlink capacity**

(57) According to the SDMA approach, the beam-former employed at each base station of a GSM network is designed to resolve in space the multiple co-channel users allowed in the cell sector by generating appropriate beam patterns for each one of them. Nevertheless, there are case where the CIR of one of the co-channel mobile users, monitored in the base station BS, falls below a preset threshold value. In this case a channel reallocation is instructed for this user. This allows either tighter reuse of channels for the same number of users in each cell/sector or an increased number of co-channel users in each cell/sector.

FIG. 2b

**Description**

This invention relates to a mobile telecommunications network with improved downlink capacity, especially to a GSM (Global System for Mobile communications) network employing Space Division Multiple Access (SDMA) techniques.

In a GSM system in which the network is arranged as a series of contiguous cells, each served by a base station with a single antenna, the objective is to improve the trade-off between quality of service, i.e. minimum interference between calls, and maximum number of users. The common approach to reduce interference is to permit only one user in a cell, or, since cells are divided into three 120 degree sectors, to permit only one user in a sector, but this restricts the number of users. When each cell or sector is supplied with a number of radio channels, permitting only one user per radio channel per sector provides some increase in capacity.

When multiple antennas are employed at the base station of each cell, a beamforming scheme is applied in the downlink. Multiple users in the same cell or cell sector can be allocated on the same radio channel. For each user a beam is formed which "steers" the transmitted power towards the appropriate direction. This approach is known as Space Division Multiple Access (SDMA).

A spatial channel allocator is proposed by P Zetterberg and B Ottersten in "The Spectrum Efficiency of a Basestation Antenna Array System for Spatially Selective Transmission", IEEE Trans. Vehicular Technology, Vol. 44, pp.651-660, August 1995. This technique assumes the knowledge of all directions associated with the mobiles present, and assigns the spatial channels so that mobiles operating on the same channel have maximal angular separation. However, in a multi-path environment, knowledge of all directions is unrealistic, and in the presence of large angular spread the directions-of-arrival estimation may fail completely.

Further, in circumstances in which two mobile users are initially separated by an acceptable angular distance in the same sector, it may be the case that by movement of one or both mobiles, the angular distance is reduced so that the beams become unresolvable. In effect the users are now inseparable and unacceptable levels of interference occur.

It is the object of the invention to provide an arrangement in which angular unresolvability of two co-channel mobile users is prevented.

According to the invention a method of operating a mobile telecommunications network, the network having a multiplicity of contiguous telecommunications cells, comprising providing directional beams for a plurality of mobile users in the same telecommunications cell or sector of a cell and on the same telecommunications channel; characterised by monitoring the carrier-to-interference ratio for each user; comparing the monitored values with a threshold value; and when the threshold value is reached by a user, allocating a different telecommunications channel to that user.

Also according to the invention a base station for a mobile telecommunications cell sector comprising a plurality of antennae; beamforming means to provide a plurality of directional beam patterns on the same telecommunications channel; and receiving means arranged to receive spatial information from every mobile user served by the base station; characterised by spatial allocation means arranged to store a threshold value of carrier-to-interference ratio; to monitor the carrier-to-interference ratio for every mobile user served by the base station; to compare the received values to the threshold value and, when the threshold value is reached for a mobile user to allocate a different telecommunications channel to that mobile user.

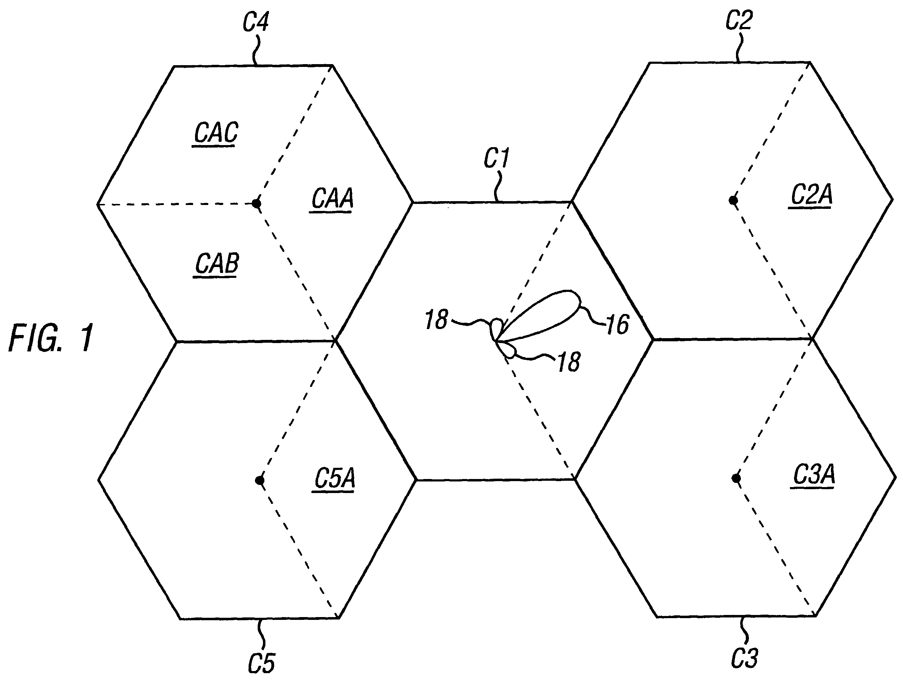

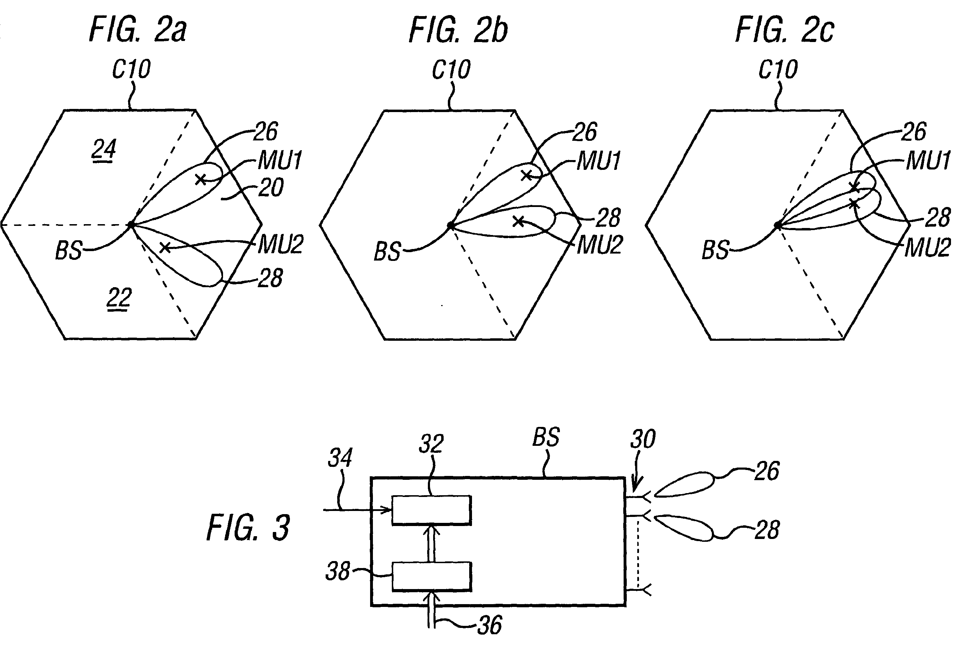

In the drawings, Figure 1 illustrates five hexagonal cells of a GSM system. The invention will be described by way of example only with reference to Figures 1 and 2 in which:-

Figure 2 illustrates the use of two directional beams in the same sector of a telecommunications cell; and
Figure 3 illustrates a mobile telecommunications system base station.

Figure 1 illustrates five hexagonal cells C1 to C5, each divided into three 120 degree sectors, such as sectors 10, 12, 14 in cell C4. In a cellular system such as the GSM system, it is known that in the downlink, sectors of the cells employing the same frequency channels interfere, for example, assuming 1/3 frequency reuse pattern, sectors C4A and C5A of cells C4 and C5 cause interference to the users in sector C1A of cell C1, while sector C1A causes interference to users in sectors C2A, C3A of cells C2 and C3.

The use of directional beams alleviates the problem of interference in the downlink, by efficiently transmitting power toward the desired directions, compared to the omnidirectional transmission with a single antenna.

One such directional beam is shown in sector C1A of cell C1; the beam has a major lobe 16 in the required direction and relatively small side lobes 18. This alleviates intracell interference by directing the power to a required mobile.

Figure 2 illustrates the use of directional beams in more detail. In Figure 2A, a hexagonal telecommunications cell C10 is divided into three sectors 20, 22, 24 having a base station BS for each sector. Within sector 20 there are two mobile users MU1 and MU2. The base station BS generates directional beams 26, 28 in the same channel, one to each user. MU1 and MU2 are well separated and the beams have a substantial angle between them.

In Figure 2B user MU2 has moved so that the angle between the beams has decreased substantially. In Figure 2C, user MU2 has moved so that the angle between the beams 26, 28 is now very small; MU1 and MU2 are in effect within the main lobe of each beam, the beams are inseparable and considerable interference results between the mobile users.

In the invention, the CIR (Carrier-to-Interference Ratio) of both users is monitored. As the interbeam angle decreases, the CIR also decreases. A CIR threshold is set and when the CIR of one MU reaches the threshold, that mobile is allocated to a different radio channel.

In a simulation, assume that there are Nc cells in a cluster and three 120 degree sectors in each cell. Each sector uses either the whole radio spectrum allocated to each cell (S=1) or one third of the spectrum (S=3). If there are U co-channel users in the same cell sector, the Spatial Division Multiple Access capacity $C_{SDMA}$ can be defined as

$$C_{SDMA} = \frac{U}{N_c x S}.$$ (1)

Considering a typical urban GSM radio environment as set out in GSM 05.05, version 5.10.0, 1996, the stochastic geometry-based channel model is described by J Fuhl, A F Molisch, and E Bonek in" Unified channel model for mobile radio systems with smart antennas", IEE Proc. Radar, Sonar & Navig., Vol.145, No.1, February 1998 can be used for the analysis. The cells have a radius of five km and the base station at each sector employs a uniform linear array of N antennae with half a wavelength interelement spacing.

In the CIR calculations, only the first ring of interfering cells is considered, e.g. for 1/3 frequency reuse pattern cells C2, C3, C4 and C5 in Figure 1. The path loss exponent is 4 and the standard deviation of the log-normal shadow fading distribution is 6dB. It is assumed that the speed of all mobile users is 50km/h. A maximum number of 6 handovers, i.e. six allocations of a mobile to a different channel, is allowed.

The objective is to optimise the trade-off between $C_{SDMA}$ and quality, with quality being charactersised by the probability of an outage, $P_{out}$ where:-

$$P_{out} = Pr(CIR < CIR_{thr}).$$ (2)

The threshold is set as 9dB.

Two approaches to optimising the trade-off can be taken, fixed capacity and optimised capacity.

In the fixed capacity approach, the number of SDMA co-channel users U is kept fixed and the objective is to improve quality for each user. This is illustrated in Table 1 in which :-

N = the number of antennae
Reuse = Frequency Reuse pattern
U = number of users in a sector
$C_{SDMA}$ is calculated from Equation 1
CIR is calculated as 5% of the cumulative density function given in Equation 2

TABLE 1 -

| SPATIAL CHANNEL ALLOCATION STRATEGY FOR FIXED CAPACITY - | | | | |
|---|---|---|---|---|
| N | Reuse | U | $C_{SDMA}$ | $CIR_{5\%}$ (dB) |
| 4 | 1/3 | 2 | 0.67 | 2 |
| 6 | 1/3 | 2 | 0.67 | 8.5 |
| 8 | 1/3 | 2 | 0.67 | 11 |
| 8 | 4/12 | 2 | 0.17 | 12.5 |
| 8 | 7/21 | 2 | 0.09 | 14.2 |

The achieved CIR is the measure of capacity enhancement. The improvement in CIR can then be traded for tighter reuse (smaller $N_c$ x S) i.e. a more aggressive channel reuse, and therefore improved capacity.

In the optimised capacity approach, the maximal number of SDMA co-channel users is allocated on the same channel, subject to the constraint that the CIR of each user is higher than the pre-specified level, 9dB in the example. This is illustrated in Table 2.

TABLE 2 -

| SPATIAL CHANNEL ALLOCATION STRATEGY FOR OPTIMISED CAPACITY | | | | |
|---|---|---|---|---|
| **N** | **Reuse** | **U** | **$C_{SDMA}$** | **$CIR_{5\%}$ (dB)** |
| 4 | 1/3 | 1.7 | 0.57 | 9 |
| 6 | 1/3 | 2.1 | 0.7 | 9.8 |
| 8 | 1/3 | 2.2 | 0.73 | 10.5 |
| 8 | 4/12 | 2.4 | 0.2 | 11 |
| 8 | 7/21 | 2.5 | 0.12 | 12 |

The achieved number of SDMA users is the measure of the capacity enhancement of this approach, i.e. an increased number of users in the same cell sector on the same radio channel. In effect, intracell co-channel interference has been mitigated.

Although intercell interference is taken into account in the above simulation results, no intercell interference mitigation scheme is employed. In order to further improve capacity, SDMA approach can be combined with an intercell interference mitigation scheme, the so-called Spatial Filtering for Interference Reduction (SFIR) approach.

It is to be understood that the adapted beam arrangement according to the invention does not require direction-of-arrival estimation, as set out in the prior art of Zetterberg, and is based on information sent from each mobile to its active base station; such information is a feature of GSM standards so that no modification of mobile equipment is required.

Referring now to Figure 3, which is highly schematic, a base station BS has a number of antennae 30 and contains a beamformer 32 and many other components (not illustrated). The basestation BS receives spatial information 34 for every mobile user MU and the beamformer directs a beam pattern towards each MU. Figure 2 shows two beams 26, 28 on the same channel as in Figure 2 directed towards MU1 and MU2.

The received spatial information 34 is available on the uplink. For application of the present invention, the uplink information is expressed in the form of covariance matrices corresponding to the channel response vectors between each user and the antenna array.

As is provided for in GSM specifications, the MUs send information 36 to the BS about their CIR status and, in a base station according to the invention, this CIR information is directed to a spatial allocation circuit 38. Circuit 38 contains a preset CIR threshold and the CIR information from each MU is compared with this threshold. When the CIR, e.g. of MU2, falls before the desired level because it has approached MU1 too closely for beam separation, the circuit 38 instructs the base station to allocate MU2 to a different channel and informs the beamformer of the different set of mobile users now sharing the same channel, so that the appropriate beam patterns are generated. The channel originally allocated to MU2 can now be allocated to a different mobile in the same sector, but at a greater angular distance from MU1. If the new arrangement does not satisfy the CIR threshold, re-allocation is instructed until the condition is satisfied or a maximum number of re-allocations is reached.

Application of the invention does not require any modification to a mobile system and requires only a small additional feature to each base station. The CIR threshold can be under the control of the network operator.

By preventing the development of a situation in which two mobile users become inseparable so far as directional beams are concerned, use of the invention results in an improvement in the trade-off between SDMA capacity and CIR.

**Claims**

1.    A method of operating a mobile telecommunications network, the network having a multiplicity of contiguous telecommunications cells, comprising providing directional beams for a plurality of mobile users in the same telecommunications cell or cell sector and on the same telecommunications channel; **characterised by** monitoring the Carrier-to-Interference Ratio for each user; comparing the monitored values with a threshold value; and when the threshold value is reached by any mobile user in the network, allocating a different channel to that mobile user.

2.    A method according to Claim 1 in which the network is a GSM network.

**3.** A method according to Claims 1 and 2 in which the method is applied in the downlink.

**4.** A method according to Claims 1 to 3 in which the number of co-channel users within a cell sector is kept constant and the Carrier-to-Interference Ratio of each user is improved.

**5.** A method according to Claims 1 to 3 in which the Carrier-to-Interference Ratio of each mobile user is maintained at an acceptable level and the number of co-channel users per cell or per cell sector is increased.

**6.** A base station (BS) for a mobile telecommunications network comprising a plurality of beamforming antennae (30); beamforming means (32) to provide a plurality of directional beam patterns (26, 28) on the same radio channel; and receiving means arranged to receive spatial information (34) from every mobile user (MU1, MU2) served by the base station (BS); **characterised by** spatial allocation means (38) arranged to store a threshold value of Carrier-to-Interference Ratio, to compare the Carrier-to-Interference Ratio information for every mobile user (MU1, MU2) served by the base station (BS) to the threshold value and, when the threshold value is reached for one user (MU2) to instruct the base station to allocate a different radio channel to that mobile user and to inform the beamformer (32) of the different set of mobile users sharing the same channel, so that the appropriate beam patterns are generated.

FIG. 1

C2 · C2A · C3 · C3A · C1 · 16 · 18 · 18 · C4 · CAA · CAC · CAB · C5 · C5A

FIG. 2a

FIG. 2b

FIG. 2c

FIG. 3

EP 1 187 503 A1

**European Patent Office**

## EUROPEAN SEARCH REPORT

Application Number

EP 00 30 7844

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 078 814 A (JEFFRIES ANDREW WILLIAM ET AL) 20 June 2000 (2000-06-20) * the whole document * | 1-6 | H04Q7/36 |
| X | US 5 649 292 A (DONER JOHN R) 15 July 1997 (1997-07-15) | 1-3 | |
| A | * column 2, line 52 - column 4, line 16 * * column 6, line 61 - column 8, line 39 * | 5,6 | |

TECHNICAL FIELDS SEARCHED (Int.Cl.7)

H04Q

The present search report has been drawn up for all claims

| Place of search | Date of completion of the search | Examiner |
|---|---|---|
| THE HAGUE | 7 March 2001 | Coppieters, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 30 7844

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2001

| Patent document cited in search report | | Publication date | Patent family member(s) | | Publication date |
|---|---|---|---|---|---|
| US 6078814 | A | 20-06-2000 | GB | 2328840 A | 03-03-1999 |
| | | | BR | 9801682 A | 18-05-1999 |
| | | | CA | 2237483 A | 28-02-1999 |
| US 5649292 | A | 15-07-1997 | AU | 684679 B | 18-12-1997 |
| | | | AU | 4196996 A | 23-05-1996 |
| | | | CA | 2203994 A | 09-05-1996 |
| | | | EP | 0789978 A | 20-08-1997 |
| | | | WO | 9613952 A | 09-05-1996 |